Europäisches Patentamt

European Patent Office

Office européen des brevets

(19)

(11) Veröffentlichungsnummer: **0 009 805**
**B1**

(12) **EUROPÄISCHE PATENTSCHRIFT**

(45) Veröffentlichungstag der Patentschrift: **18.05.83**

(21) Anmeldenummer: **79103757.5**

(22) Anmeldetag: **02.10.79**

(51) Int. Cl.³: **B 60 K 17/00, B 60 G 3/02**

(54) Fahrwerk für Kraftfahrzeuge.

(30) Priorität: **09.10.78 DE 2843917**

(43) Veröffentlichungstag der Anmeldung:
**16.04.80 Patentblatt 80/8**

(45) Bekanntmachung des Hinweises auf die Patenterteilung:
**18.05.83 Patentblatt 83/20**

(84) Benannte Vertragsstaaten:
**BE DE FR GB IT NL SE**

(56) Entgegenhaltungen:
**DE - A - 1 630 264**
**DE - A - 1 630 264**
**DE - C - 1 505 545**
**DE - C - 1 505 545**

(73) Patentinhaber: **FORD-WERKE
AKTIENGESELLSCHAFT
Ottoplatz 2 Postfach 21 03 69
D-5000 Köln 21 (DE)**
(84) **BE DE IT NL SE**
(73) Patentinhaber: **FORD MOTOR COMPANY LIMITED
Eagle Way
Brentwood Essex CM13 3BW (GB)**
(84) **GB**
(73) Patentinhaber: **FORD FRANCE SOCIETE
ANONYME
344 Avenue Napoléon Bonaparte B.P. 307
F-92506 Rueil Malmaison Cedex (FR)**
(84) **FR**

(72) Erfinder: **Voll, Walter
Fasanenweg 2
D-5068 Odenthal (DE)**
Erfinder: **Matheis, Anton
Meisenweg 4 b
D-5060 Berg.-Gladbach 2 (DE)**

(74) Vertreter: **Ritzkowsky, Harald, Dipl.-Ing. et al,
Ford-Werke Aktiengesellschaft Patentabteilung
Z/DRR-2 Ottoplatz 2
D-5000 Köln 21 (DE)**

Fahrwerk für Kraftfahrzeuge

Die Erfinfung betrifft ein Fahrwerk für Kraftfahrzeuge mit einer vornliegenden, auf einem Vorderachsquerträger elastisch abgestützten Motor-Getriebe-Einheit, die über einen biege- und drehsteifen, die Kardanwelle umfassenden Verbindungträger mit einer hintenliegenden Antriebs-Einheit fest verbunden ist, und mit einem beiderseits mit je einem elastischen Element an der Karosserie abgestützten Hinterachsquerträger der Radaufhängung zusammenwirkt.

Ein Fahrwerk dieser Art ist in der schwiezerischen "Automobil-Revue", Nr. 41 vom 19.9.68, Seite 5, beschrieben. Bei ihm ist die Motor-Getriebe-Einheit über den biegesteifen, die Kardanwelle umfassenden und als drehsteifes Rohr ausgebildeten Verbindungsträger mit einer Antriebseinheit fest verbunden, die aus einer Differential-Radaufhängungs-Einheit mit Schräglenkern besteht.

Hierbei ist jedoch das Differential über einen eigenen, darüber angeordneten Querträger elastisch an der Karosserie abgestützt, während die Radaufhängung über einen davon unabhängigen, unter dem Differential angeordneten Hinterachsquerträger auf breiter Basis elastisch an der Karosserie abgestützt ist.

Diese bekannte Fahrwerk ist wegen der beiden hinteren Querträger baulich und montagemäßig aufwendig. Darübervhinaus sind nur die Schräglenker der Radaufhängung über ihre elastischen Schwenkbüchsen und über die elastischen Elemente des Hinterachsquerträgers zweifach gegenüber der Karosserie schwingungsgedämpft. Durch die unmittelbare Befestigung des Differentials an dem oberen Querträger und dessen Abstützung über elastische Elemente an der Karosserie werden einerseits durch die Massenkräfte des Motors verursachte Schwingungen um die Längsachse und andererseits Zahnräderlaufgeräusche des Differentials nur einfach schwingungsgedämpft auf die Bodengruppe der Karosserie übertragen.

Aufgabe der Erfindung ist es, ein Fahrwerk dieser Art zu schaffen, bie dem der bauliche und montagemäßige Aufwand verringert und die Schwingungsdämpfung der hintenliegenden Antriebseinheit verbessert ist.

Gemäß der Erfindung wird diese Aufgabe dadurch gelöst, daß der Verbindungsträger mit dem Hinterachsquerträger über zwei parallel zur Fahrwerklängsachse im Abstand voneinander angeordnete elastische Elemente um eine Längsachse schwenkbar verbunden ist.

Dadurch, daß erfindungsgemäß' der Verbindungsträger mit dem Hinterachsquerträger über zwei parallel zur Fahrwerkslängsachse im Abstand voneinander angeordnete elastische Elemente um eine Längsachse schwenkbar verbunden ist, wird durch den Wegfall des oberen Querträgers für das Differential der Bau- und Montageaufwand verringert und zugleich durch die um eine Längsachse schwenkbare Verbindung eine Übertragung der durch die Massenkräfte des Motors verursachten Schwingungen um die Längsachse auf den Hinterachsquerträger weitestgehend unterbunden. Darübervhinaus werden Zahnräderlaufgeräusche des Differentials über die elastischen Elemente der Verbindung des Verbindungsträgers mit dem Hinterachsquerträger und über die elastischen Elemente der Verbindung des Hinterachsquerträgers mit der Karosserie, also doppelt gedämpft, auf die Karosserie übertragen. Diese doppelte Schwingungsdämpfung ermöglicht die Anwendung von aus Leichtmetall hergestellten Getriebegehäusen, ohne daß deren höhere Zahnräderlaufgeräusche störend in Erscheinung treten.

Die elastische Verbindung zwischen dem Hinterachsquerträger und dem Verbindungsträger überträgt die am Hinterachsquerträger durch Antriebs- und Bremsreaktionen auftretenden Schwenkmomente um eine Querachse auf den Verbindungsträger, der sie an der üblichen Zweipunkt-Lagerung der Motor-Getriebe-Einheit am Vorderachs querträger abstützt.

Weist das Fahrwerk an dem Hinterachsquerträger angeschlossene Schräglenker für die Hinterräder auf, so empfiehlt es sich, die elastischen Elemente zur Abstützung des Hinterachsquerträgers an der Karosserie möglichst nahe der Wirkungslinie der resultierenden Kräfte aus den Schräglenkern anzuordnen.

Die elastische Verbindung zwischen dem Verbindungsträger und dem Hinterachsquerträger kann auf die in den abhängigen Ansprüche 3 und 4 angegebene Weise erfolgen.

Die Erfindung wird anhand eines in der Zeichnung gezeigten Ausführungsbeispiels näher erläutert.

Es zeigt

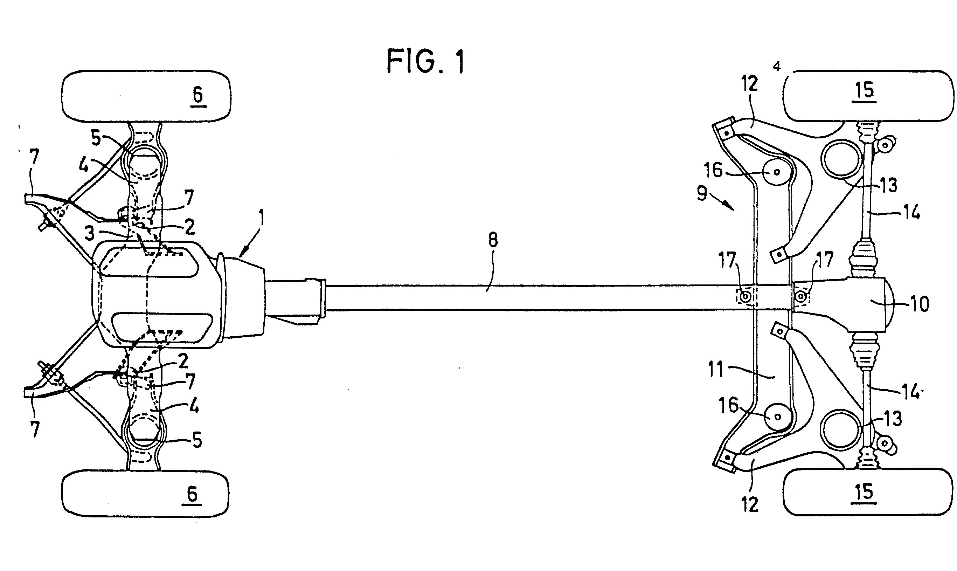

Fig. 1 die schematische Draufsicht auf ein Fahrwerk gemäß der Erfindung,

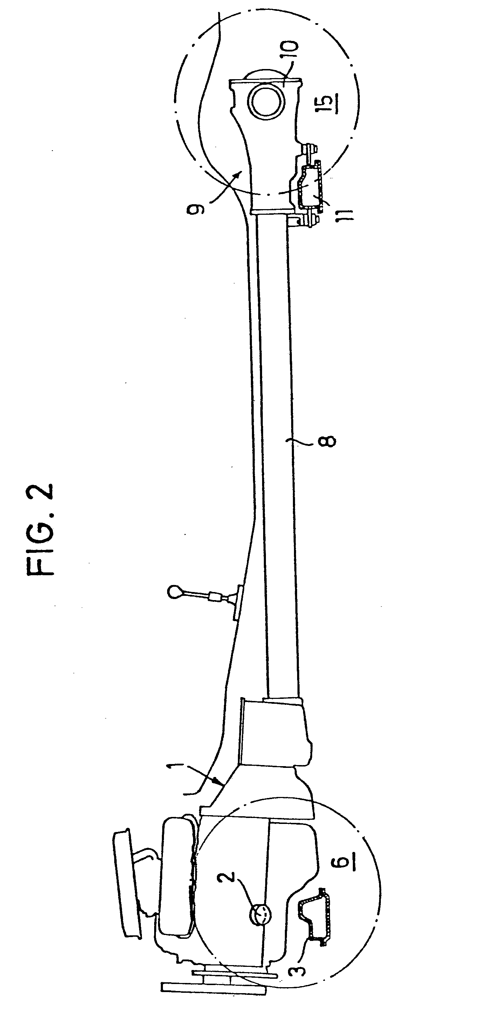

Fig. 2 eine schematische Seitenansicht des Fahrwerks nach Fig. 1,

Fig. 3 einen vertikalen Schnitt entlang der Längsachse der elastischen Verbindung zwischen dem Verbindungsträger und dem Hinterachsquerträger und

Fig. 4 einen Schnitt durch eine andere Ausführungsform der Verbindung.

In den Figuren ist eine bekannte Motor-Getriebe-Einheit 1 in herkömmlicher Weise über zwei seitliche, elastische Motorlager 2 auf einem Vorderachsquerträger 3 abgestützt, an dem die Querlenker 4 und die Schaubenfedern 5 für die unabhängig aufgehängten Vorderräder 6 des Kraftfahrzeuges angeordnet sind. Der Vorderachsquerträger 3 ist in bekannter Weise über elastische Elemente 7 an der Korosserie (nicht gezeigt) abgestützt.

Die Motor-Getriebe-Einheit 1 ist über einen biege- und drehsteifen Verbindungsträger 8 mit einer Differential-Radaufhängungseinheit 9 verbunden.

Die Differential-Radaufhängungseinheit 9 besteht in bekannter Weise aus einem Differential 10, das an einem Hinterachsquerträger 11 abgestützt ist, an dem in üblicher Weise die Schräglenker 12 für die über Schraubenfedern 13 abgefederten und über Achswellen 15 angetriebenen, unabhängig aufgehängten Hinterräder 15 angeordnet sind. Der Hinterachsquerträger 11 ist über zwei elastische Elemente 16 auf breiter Basis an der Karosserie (nicht gezeigt) abgestützt.

Der biege- und drehsteife Verbindungsträger 8 ist als Verbindungsrohr ausgebildet, das an seinem vorderen Ende über einen Flansch mit der Motor-Getriebe-Einheit 1 und an seinem hinteren Ende über einen Flansch mit dem Differential 10 fest und starr verbunden ist.

Der Verbindungsträger 8 its zugleich mit dem Hinterachsquerträger 11 durch zwei im Abstand liegende, elastische Elemente 17 um eine Längsachse schwenkbar verbunden.

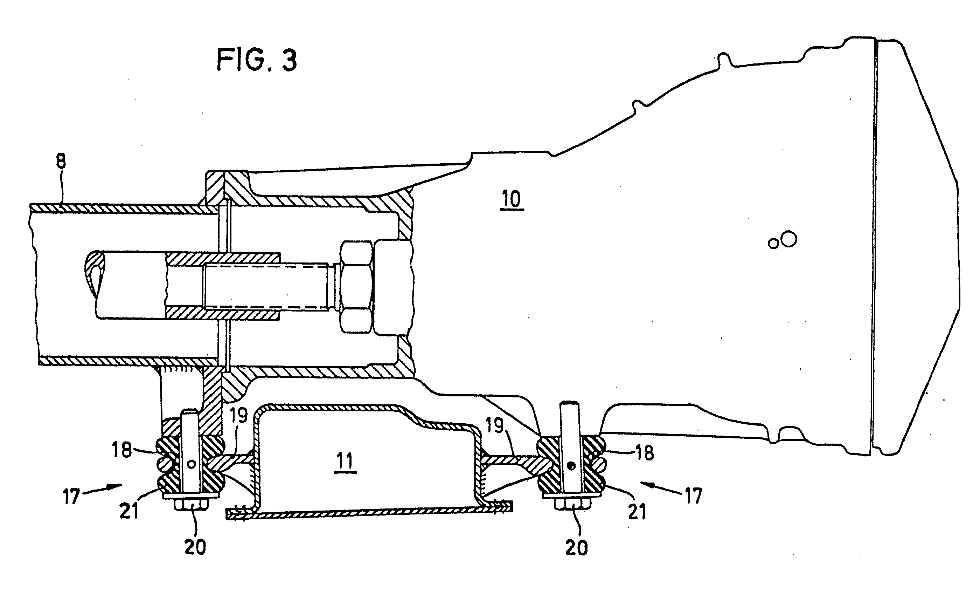

In Fig. 3 ist ein Ausführungsbeispiel dieser Verbindung im Schnitt gezeigt. Die im Abstand liegenden elastischen Elemente 17 werden hier von zwei in Öffnungen 18 in Konsolen 19 am Hinterachsquerträger 11 eingesetzte, mit vertikalen Bolzen 20 gegen den Verbindungsträger 8 bzw. das Differential 10 verspannten, vertikal angeordneten elastischen Büchsen 21 gebildet.

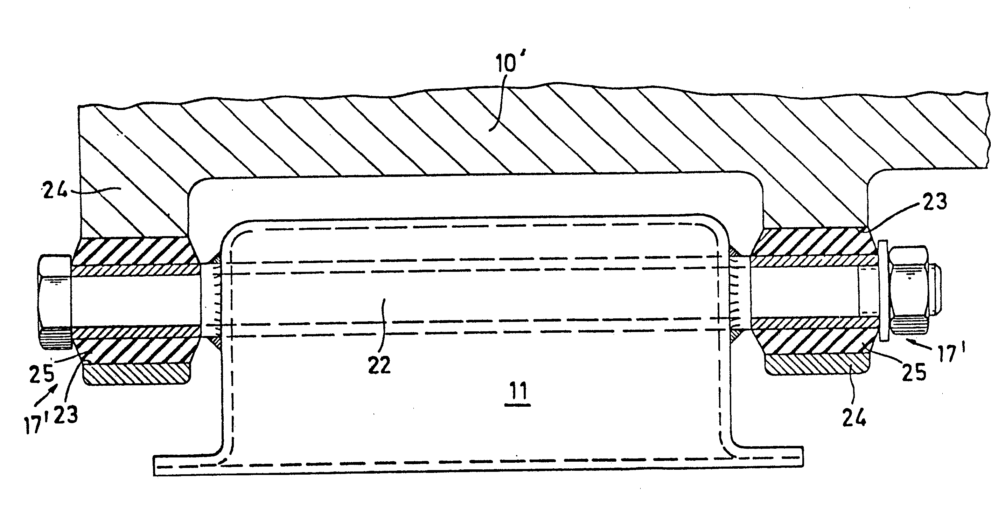

In Fig. 4 ist ein weiteres Ausführungsbeispiel dieser Verbindung gezeigt. Die im Abstand liegenden elastischen Elemente 17' werden hier von den die Enden eines im Hinterachsquerträgers 11 parallel zur Längsachse angeordneten Bolzens 22 umschließenden, in Öffnungen 23 in Armen 24 am Verbindungsträger und/oder am Differential 10' befindlichen verspannten elastischen Büchsen 25 gebildet.

Ein Fahrwerk gemäß der Erfindung wurde in Zusammenhang mit den Figuren für eine Motor-Getriebe-Einheit, die aus einer Motor-Kupplungs-Getriebe-Einheit, und aus einer Antriebs-Einheit, die aus einer Differential-Schräglenker-Radaufhängungs-Einheit besteht, beschrieben. Es ist jedoch möglich, die Erfindung auch bei Fahrwerken mit einer Antriebs-Einheit nach dem Transaxle-Prinzip oder einer De-Dion-Achse anzuwenden.

## Patentansprüche

1. Fahrwerk für Kraftfahrzeuge mit einer vornliegenden, auf einem Vorderachsquerträger (3) elastisch abgestützten Motor-Getriebe-Einheit (1), die über einen biege- und drehsteifen, die Kardanwelle umfassenden Verbindungsträger (8) mit einer hintenliegenden Antriebs-Einheit fest verbunden ist, und mit einem beiderseits mit je einem elastischen Element (16) an der Karosserie abgestützten Hinterachsquerträger (11) der Radaufhängung, dadurch gekennzeichnet, daß der Verbindungsträger (8) mit dem Hinterachsquerträger (11) über zwei parallel zur Fahrwerklängsachse im Abstand voneinander angeordnete elastische Elemente (17 bzw. 17') um eine Längsachse schwenkbar verbunden ist.

2. Fahrwerk nach Anspruch 1 mit an dem Hinterachsquerträger (11) angeschlossenen Schräglenkern (12) für die Hinterräder (13), dadurch gekennzeichnet, daß die elastischen Elemente (16) zur Abstützung des Hinterachsquerträgers (11) an der Karosserie möglichst nahe der Wirkungslinie der resultierenden Kräfte aus den Schräglenkern (12) angeordnet sind.

3. Fahrwerk nach Anspruch 1 oder 2, dadurch gekennzeichnet, daß die beiden elastischen Elemente (17) zur schwenkbaren Verbindung des Verbindugsträgers (8) mit dem Hinterachsquerträger (11) von zwei in Öffnungen (18) in Konsolen (19) am Hinterachsquerträger (11) eingesetzten, mit vertikalen Bolzen (20) gegen den Verbindungsträger (8) und/oder das Differential (10) verspannten, vertikal angeordneten elastischen Buchsen (21) gebildet sind.

4. Fahrwerk nach Anspruch 1 oder 2, dadurch gekennzeichnet, daß die beiden elastischen Elemente (17') zur schwenkbaren Verbindung des Verbindungsträgers (8) mit dem Hinterachsquerträger (11) von die Enden eines im Hinterachsquerträger (11) parallel zur Fahrwerklangsachse angeordneten Bolzens (22) umschließenden, in Öffnungen (23) in Armen (24) am Verbindungsträger (8) und/oder Differential (10') befindlichen verspannten elastischen Buchsen (25) gebildet sind.

## Revendications

1. Châssis pour véhicules automobiles comportant un bloc-moteur situé à l'avant (1), qui est monté élastiquement sur une traverse de d'essieu avant (3), qui est relié rigidement à une unité d'entraînement se trouvant à l'arrière par un fourreau d'entretoisement (8) résistant à la torsion et à la flexion et contenant l'arbre de transmission, et qui coopère avec une traverse d'essieu arrière (11) pour la suspension des roues montée sur la carrosserie de chaque côté par un élément élastique (16), caractérisé en ce que le fourreau d'entretoisement (8) est relié à la traverse d'essieu arrière (11), de manière à pouvoir osciller autour d'un axe longitudinal, par l'intermédiaire de deux éléments élastiques (17, 17') disposés à distance l'un de l'autre parallèlement à l'axe longitudinal du châssis.

2. Châssis suivant la revendication 1 muni de bras inclinés (12) pour les roues arrière (13) qui sont reliés à la traverse d'essieu arrière (11), caractérisé en ce que les éléments élastiques (12) pour le montage de la traverse d'essieu arrière (11) sur la carrosserie sont disposés le plus près possible de la ligne d'action des forces résultantes des bras inclinés (12).

3. Châssis suivant la revendication 1 ou 2, caractérisé en ce que les deux éléments élastiques (17) destinés à relier le fourreau d'entretoisement (8), de manière à lui permettre d'osciller, à la traverse d'essieu arrière (11), sont formés de deux douilles élastiques (21) disposées verticalement, insefrées dans des ouvertures (18) prévues dans des consoles (19) sur la traverse d'essieu arrière (11) et précontraintes par des boulons verticaux (20) contre le fourreau d'entretoisement (8) et/ou le différentiel (10).

4. Châssis suivant la revendication 1 ou 2, caractérisé en ce que les deux éléments élastiques (17') destinés à relier le fourreau d'entretoisement (8), de manière à lui permette d'osciller, à la traverse d'essieu arrière (11), sont formés de douilles élastiques précontraintes (25) entourant des boulons (22) disposés parallèlement à l'axe longitudinal du châssis et logées dans des ouvertures (23) prévus dans des orielles (24) du fourreau d'entretoisement (8) et/ou du différentiel (10).

**Claims**

1. Chassis for motor vehicles with a front engine/gear box unit (1) elastically supported on a front axle cross member (3), the motor/gear box unit being firmly connected with a rear drive unit by means of a connecting member (8), which is stiff in bending and torsion and surrounds the cardan shaft, and with a rear axle cross member (11) of the wheel suspension, which is supported by means of one elastic element (16) in each case on both sides of the body, characterised in that the connecting member (8) is connected with the rear axle cross member (11), so that it can be swivelled about a longitudinal axis, by means of two elastic elements (17 and 17') arranged at a distance from one another and parallel to the longitudinal axis of the chassis.

2. Chassis according to Claim 1 with semi-trailing arms (12) for the rear wheels (13), which arms are connected with the rear axle cross member (11), characterised in that the elastic elements (16) for supporting the rear axle cross member (11) on the body are placed as near as possible to the line of action of the resultant forces from the semi-trailing arms (12).

3. Chassis according to Claim 1 or 2, characterised in that the two elastic elements (17) for the swivelling connection member (8) with the rear axle cross member (11) are formed by two vertically positioned elastic bushes (21) inserted in openings (18) in brackets (19) on the rear axle cross member (11) and held against the connecting member (8) and/or the differential (10) by means of vertical bolts (20).

4. Chassis according to Claim 1 or 2, characterised in that the two elastic elements (17') for the swivelling connection of the connecting member (8) with the rear axle cross member (11) are formed by elastic bushes (25) held in openings (23) in arms (24) on the connecting member (8) and/or differential (10') and surrounding the ends of a bolt (22) positioned in the rear axle cross member (11) parallel to the longitudinal axis of the chassis.

# FIG. 1

0 009 805

# FIG. 2

0 009 805

FIG. 3

8

10

11

18

18

17

17

19

19

21

21

20

20

0 009 805

10′

24

23

22

11

25

17′

17′ 23

25

24

0 009 805

4